# EUROPÄISCHE PATENTSCHRIFT

(11) **EP 2 114 805 B1**
(45) Veröffentlichungstag und Bekanntmachung des Hinweises auf die Patenterteilung: **06.06.2012**
(21) Anmeldenummer: 08706961.3
(22) Anmeldetag: 05.01.2008
(51) Int. Cl.: B65G 61/00, B65G 47/90

(54) **ROBOTERSYSTEM ZUR BELADUNG VON LADEMITTELN MIT STÜCKGUTEINHEITEN**
ROBOT SYSTEM FOR LOADING PART-LOAD UNITS ONTO LOADING MEANS
SYSTEME ROBOTIQUE POUR CHARGER DES COLIS DE DETAIL SUR DES MOYENS DE CHARGEMENT

(30) Priorität: 08.01.2007 DE 102007001263
(43) Veröffentlichungstag der Anmeldung: 11.11.2009
(73) Patentinhaber: KUKA Roboter GmbH, 86165 Augsburg (DE)
(72) Erfinder: RUGE, Gerda, 86157 Augsburg (DE)
(74) Vertreter: Patentanwälte Funk & Böss GbR
(86) Internationale Anmeldenummer: PCT/EP2008/000042
(87) Internationale Veröffentlichungsnummer: WO 2008/083936

(56) Entgegenhaltungen:
- EP-A- 1 489 025

## Beschreibung

Die Erfindung geht aus von einem Robotersystem zur Beladung von Lademitteln mit Stückguteinheiten, wobei das Robotersystem eine Greifereinheit zum Greifen der Stückguteinheiten, eine Steuereinheit zum Steuern der Bewegungen der Greifereinheit und zum Bestimmen eines Lademusters der Stückguteinheiten umfasst. Ferner betrifft die Erfindung ein Verfahren zum Steuern eines Robotersystems der oben genannten Art.

Aus dem Stand der Technik ist es bekannt, Industrieroboter, insbesondere Gelenkroboter, zum Beladen von Lademitteln mit Stückguteinheiten, insbesondere zum Palettieren, also Beladen von Paletten mit Paketen, zu nutzen. Dabei werden Industrieroboter insbesondere zur Automatisierung des Beladens von Paletten mit verschieden großen Paketen mit beliebigem Sortenmix verwendet, während Palettierungen mit homogenen Packstücken, insbesondere mit gleichen Packstückhöhen, üblicherweise schnell und kostengünstig mit Palettierautomaten durchgeführt werden können. Einen Überblick über gängige Palettierungsverfahren gibt die Monographie "Verfahren zum automatischen Palettieren von quaderförmigen Packstükken im beliebigen Sortenmix" von Walter Michael Strommer, Springer-Verlag 1992. Die bekannten Verfahren zum Bestimmen der Packpositionen einzelner Stückguteinheiten sind vorrangig zur Optimierung des Füllgrads ausgelegt. Aspekte der Stabilität der Lademuster bzw. der den Lademustern entsprechenden Stapel werden allenfalls nachrangig in einer pauschalen Weise berücksichtigt, wenn sich mehrere Wahlmöglichkeiten mit gleichem Füllgrad ergeben. Die Stabilität wird dann nicht berechnet oder bestimmt, sondern die Lademuster werden so gewählt, dass aufgrund heuristischer Betrachtungen eine gewisse Stabilität erwartet werden kann.

Verschiedene heuristische Algorithmen für homogenes, quaderförmiges Stückgut sind in E.E. Bischoff: "Stability aspects of pallet loading" OR Spektrum (1991) 13: 189-197, Springer Verlag 1991 beschreiben. Die heuristischen Algorithmen beschränken sich jedoch in der Praxis im Wesentlichen darauf, dass Packpositionen, in denen eine Stückguteinheit auf wenigstens zwei anderen Stückguteinheiten aufliegt, gegenüber solchen Packpositionen bevorzugt werden, in denen die betrachtete Stückguteinheit nur auf einer anderen Stückguteinheit aufliegt, so dass eine Verschränkung entsteht und Türme vermieden werden.

Insbesondere bei sehr heterogenem Stückgut ist die Frage der Stabilität bzw. des Kippmoments eines Lademusters jedoch sehr komplex und eine durchgehende Berechnung ist nicht möglich, da keine vollständige Beschreibung der Objekte vorliegt. Elastizität, Beschädigungen, genaue Lage des Schwerpunkts u.ä. sind in der Regel unbekannt. Dazu kommen Fehlertoleranzen. Die Größe der Pakete ist nur bis auf ca. 0,5 cm in jede Richtung bekannt. Eine Bestimmung ist daher insbesondere von Steuerungsrechnern bekannter Robotersysteme nicht in Echtzeit durchführbar, also nicht in einer Zeit, die klein im Vergleich zu üblichen oder gewünschten Ladezeiten ist. Daher bleibt in der Praxis die Frage der Stabilität eines Lademusters bzw. eines von dem Robotersystem erzeugten Paketstapels offen, so dass zum Transport jedenfalls eine aufwändige Umpackung - beispielsweise aus Folie - notwendig ist.

Aus der EP 1 489 025 A2 ist eine Vorrichtung zum Greifen von Paketen bekannt, die einen Portalroboter mit umfasst. Außerdem ist darin ein Verfahren beschrieben, durch das die Stabilität einer mittels des Portalroboters aus mehreren Paketen aufzubauenden Palette überprüft werden kann.

Um die oben genannten Probleme zu lösen, wird erfindungsgemäß vorgeschlagen, dass die Steuereinheit des Robotersystems dazu vorgesehen ist, wenigstens eine Kenngröße für eine Stabilität des Lademusters zu bestimmen bzw. dass im erfindungsgemäßen Verfahren eine Kenngröße für eine Stabilität des Lademusters bestimmt wird. Dadurch kann in einer einfachen Weise entschieden werden, ob das Lademuster hinreichend stabil ist oder nicht. Die Kenngröße kann diese entscheidende Frage in einfacher Weise beantworten, ohne dass alle Kräfte und Kippmomente in drei Dimensionen etc. in einer vollständigen statischen Untersuchung berechnet werden müssen. Die Ermittlung der Kenngröße kann sich bei der Beurteilung vielmehr auf die wesentlichen Kriterien beschränken und nur solche Zwischenwerte müssen berechnet werden, die für den Wert der Kenngrosse entscheidend sind.

So sieht eine bevorzugte Ausgestaltung vor, dass das Verhältnis der eigentlichen Standfläche eines Objekts zur tatsächlich gegebenen Auflagefläche - dieses Objekts auf einem oder mehreren darunter liegenden - in die Bestimmung eingeht.

Als "Robotersystem" soll ein Roboter, insbesondere ein Industrieroboter mit mehreren frei programmierbaren und gegebenenfalls sensorgeführten Achsen mit Endeffektoren und allen weiteren Peripheriekomponenten und Greifwerkzeugen, die zur Erfüllung der jeweiligen Aufgabe benötigt werden, verstanden werden. Ein Stückgut nach DIN 30781 ist ein individuelles Gut, das stückweise gehandhabt wird und in die Transportformation bzw. in das Lademuster eingeht. Gattungsgemäße Robotersysteme sind besonders vorteilhaft im Zusammenhang mit Stückgutelementen einsetzbar, die nach DIN 55405 auch als Packstücke oder Pakete bezeichnet werden können.

Wegen der guten Handhabbarkeit und der vergleichsweise leicht erreichbaren Stabilität ist das erfindungsgemäße Robotersystem bzw. das erfindungsgemäße Verfahren besonders vorteilhaft zum Packen von quaderförmigen Stückgütern bzw. Paketen einsetzbar. Unter "vorgesehen" soll in diesem Zusammenhang auch "ausgelegt" und "ausgestattet" verstanden werden.

Das erfindungsgemäße Robotersystem kann einerseits zur Bestimmung des Lademusters bei unbekannter Kommission verwendet werden, d.h. wenn Pakete von im Voraus unbekannter Größe und unbekanntem Gewicht über eine Fördereinrichtung nacheinander zugeführt werden und vor dem Verladen höchstens eine geringe Zahl von Paketen bzw. Stückguteinheiten in einem Puffer gespeichert werden können. Die Steuereinheit berechnet dann die Stabilität des um ein oder mehrere Pakete aus dem Paketpuffer ergänzten, bereits teilweise in einem Teillademuster aufgeschichteten Paketstapels. Die Steuereinheit vergleicht anhand der Kenngröße die Stabilität verschiedener möglicher, sich durch eine unterschiedliche Packposition und eine unterschiedliche Auswahl der zusätzlichen Pakete unterscheidenden Lademuster.

Andererseits kann das Robotersystem zur Bestimmung des Lademusters bei bekannter Kommission, d.h. bei einem bekannten Sortiment von Stückguteinheiten, die auf der Ladeeinheit verstaut werden sollen, genutzt werden. Dabei berechnet die Steuereinheit die Stabilität des gesamten Lademusters, das auch in einem sequentiellen Algorithmus generiert sein kann, und vergleicht die Kenngröße mit den Kenngrößen anderer möglicher Lademuster.

In einer Weiterbildung der Erfindung wird vorgeschlagen, dass die Steuereinheit dazu vorgesehen ist, aus mehreren Lademustern ein Lademuster abhängig von der Kenngröße für die Stabilität auszuwählen. Es wäre jedoch auch denkbar, es bei der Ermittlung der Stabilität zu belassen und die Kenngröße lediglich zur Verwendung in nachgeordneten Transportvorgängen oder bei der Wahl einer Umpackung der beladenen Ladeeinheit zu berücksichtigen.

Wenn die Steuereinheit dazu ausgelegt ist, in die Bestimmung der Kenngröße die Lage der Stückguteinheiten zueinander, die Größe der Stückguteinheiten und/oder das Gewicht der Stückguteinheiten einfließen zu lassen, können in die für die Stabilität entscheidenden Faktoren in einfacher Weise berechnet werden.

Zum Verlauf des statischen Problems und Bestimmung des Standmoments wird eine Schwerpunktlage angenommen, soweit diese nicht gegebenenfalls aus anderen Faktoren berechenbar ist.

Ferner kann die Steuereinheit aus den oben genannten Faktoren einen Abstand des Schwerpunkts wenigstens der Stückguteinheit oder der Gruppe von Stückguteinheiten von einer Kippkante der Stückguteinheit oder der Gruppe von Stückguteinheiten zu berechnen. Als "Kippkante" soll in diesem Zusammenhang eine horizontale Kante bezeichnet werden, um welche das Objekt, also die Stückguteinheit oder die Gruppe von Stückguteinheiten gekippt werden kann. Insbesondere sind die Kanten der Bodenfläche des Objekts und die Kanten einer Stellfläche, auf welcher das Objekt steht und die gleichzeitig Teil der konvexen Hülle der Stellfläche sind, Kippkanten.

Eine besonders aussagekräftige Kenngröße für die Kippsicherheit kann gewonnen werden, wenn die Steuereinheit ein Verhältnis des Abstands des Schwerpunkts von der Kippkante der Stückguteinheit oder der Gruppe von Stückguteinheiten zu einer Höhe der der Stückguteinheit oder der Gruppe von Stückguteinheiten bildet, wobei weiter das Verhältnis von Auflagefläche des Pakets auf unterliegende Pakete zu Standfläche des Pakets eingehen kann.

Ferner kann die Steuereinheit eine aussagekräftige Kenngröße für eine Kippsicherheit eines Objekts abhängig von einem Verhältnis des Kippmoments, das zum Kippen des Objekts benötigt wird, zum Standmoment des Objekts bestimmen. Hierzu wird das minimale Kippmoment aller Pakete und aller Kippkanten mit direktem oder indirektem Kontakt berechnet.

Dabei kann ein vollständiges Bild der Stabilität des Objekts in seiner Umgebung gewonnen werden, wenn die Steuereinheit bei der Bestimmung des Standmoments des Objekts die Gewichtskraft des Objekts sowie die von anderen Objekten auf das betrachtete Objekt übertragenen vertikalen Kraftkomponenten berücksichtigt.

Wenn die Steuereinheit dazu ausgelegt ist, wenigstens eine Kenngröße für eine Dichte des Lademusters der Stückguteinheiten zu bestimmen, können weitere qualitative Informationen über die Stabilität des Lademusters gewonnen werden, da Lademuster mit hoher Dichte erfahrungsgemäß stabiler sind als Lademuster mit geringer Dichte bzw. Raumnutzung.

Wenn die Steuereinheit dazu ausgelegt ist, Kräfte durch einen Stapel von Stückguteinheiten bzw. entlang von Kontaktflächen zwischen Paketen und den darunter liegenden zu propagieren, kann der Rechenaufwand entscheidend verringert werden. Wenn ein Paket hinzugefügt wird, müssen alle darunter liegenden, die direkt oder indirekt Kontakt haben, neu berechnet werden. Vorteil ist hier, dass nur die Pakete neu berechnet werden müssen, die Kontakt haben.

Eine schnelle und unkomplizierte Entscheidung über die Stabilität der Paketkonfiguration kann ermöglicht werden, wenn die Steuereinheit die Kenngröße für die Stabilität des Lademusters abhängig von einer vorgegebenen Zahl von Merkmalen aus einer approximativen Funktion bestimmt. Auch wenn die approximative Funktion im Einzelfall nicht präzise sein mag, ist die Präzision für den Zweck jedoch hinreichend.

Dabei kann die Steuereinheit die approximative Funktion besonders vorteilhaft in einem Trainingsverfahren unter der Verwendung von Lademustern mit bekannter Stabilität bestimmen. Dadurch kann auf statische Berechnungen verzichtet werden. Eine zuverlässige Einschätzung des Risikos eines bestimmten Lademusters kann erreicht werden, wenn die approximative Funktion Werte der Merkmale auf einen Wahrscheinlichkeitswert der zugehörigen Lademuster abbildet, der eine Wahrscheinlichkeit für dessen Stabilität angibt. Die approximative Funktion kann beispielsweise durch ein neuronales Netz oder durch ein statistisches Klassifikationsverfahren realisiert sein. Beispielsweise kann die approximative Funktion ein quadratischer Bayesscher Klassifikator sein, der das Lademuster in die Klassen "stabil" und "instabil" oder in verschiedene Stabilitätsklassen einordnet.

Eine deutliche Reduktion der Rechenzeit ist erreichbar, wenn Steuereinheit dazu ausgelegt ist, zur Bestimmung der Kenngröße für die Stabilität des Lademusters nur vertikale Kraftkomponenten innerhalb des Lademusters zu berücksichtigen.

Auch wenn die Erfindung unter Bezug auf das Stapeln von Paketen beschrieben wird, erfasst sie auch die Behandlung des Palettierens von Palette auf Palette, z.B. mit einem Roboter auf einer Linearachse, der zwischen Paletten verfährt, oder des Umpalettierens von Paletten verschiedener Größe.

Nachfolgend ist die Erfindung anhand einer bevorzugten Ausführungsform unter Bezugnahme auf die Zeichnungen näher erläutert. Die Beschreibung, die Ansprüche und die Figuren enthalten zahlreiche Merkmale in Kombination, die der Fachmann auch einzeln betrachten und zu weiteren sinnvollen Kombinationen im Sinne der Erfindung zusammenfassen wird. Dabei zeigen:
- Figur 1: ein Robotersystem zur Beladung von Paletten mit Paketen,
- Figur 2: eine schematische Darstellung eines Lademusters mit einer Propagation von Gewichtskräften und
- Figur 3: ein Flussdiagramm eines Stabilitätsbewertungsschritts in einem Verfahren zur Bestimmung eines Lademusters.

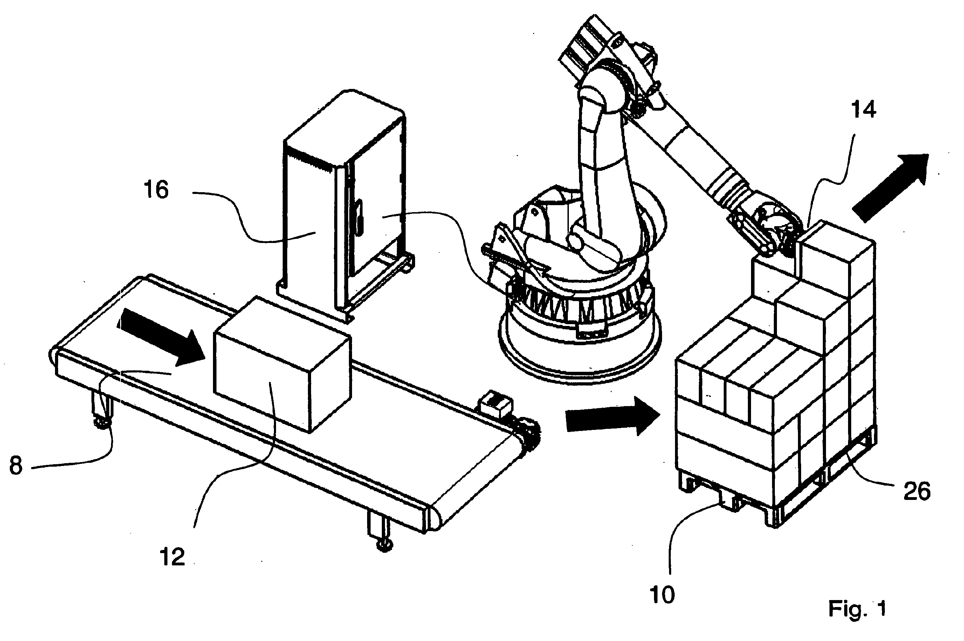

Figur 1 zeigt ein Robotersystem zur Beladung von Lademitteln 10 mit Stückguteinheiten 12, und zwar zur Beladung von Paletten mit Paketen. Das Robotersystem umfasst eine Greifereinheit 14 zum Greifen der Stückguteinheiten 12 und eine Steuereinheit 16 zum Steuern der Bewegungen der Greifereinheit 14 und zum Bestimmen eines Lademusters der Stückguteinheiten 12. Das Lademuster beinhaltet sowohl alle Informationen über die räumliche Anordnung der Stückguteinheiten 12 als auch die Zeitliche Folge der Ladeoperationen. Besonders vorteilhaft kann das Lademuster als eine Sequenz von Ladeoperationen dargestellt werden.

Eine Fördereinrichtung 18 führt dem Robotersystem die Stückguteinheiten 12 einzeln zu und die Steuereinheit 16 berechnet jeweils ausgehend von einem bereits bestehenden Teilstapel ein nach verschiedenen Kriterien optimiertes Lademuster, wie es nach dem Hinzufügen einer weiteren Stückguteinheit 12 erscheint. In der Steuereinheit 16 ist ein Verfahren zum Steuern des Robotersystems als Software implementiert.

Durch die Software ist die Steuereinheit 16 (die aus mehreren PCs bestehen kann) dazu ausgelegt, eine Kenngröße K für eine Stabilität des Lademusters zu bestimmen.

Anhand der Kenngröße K für die Stabilität wählt die Steuereinheit 16 aus mehreren Lademustern ein Lademuster aus und steuert die Greifereinheit 14 derart, dass ein dem ausgewählten Lademuster entsprechender Paketstapel 26 entsteht.

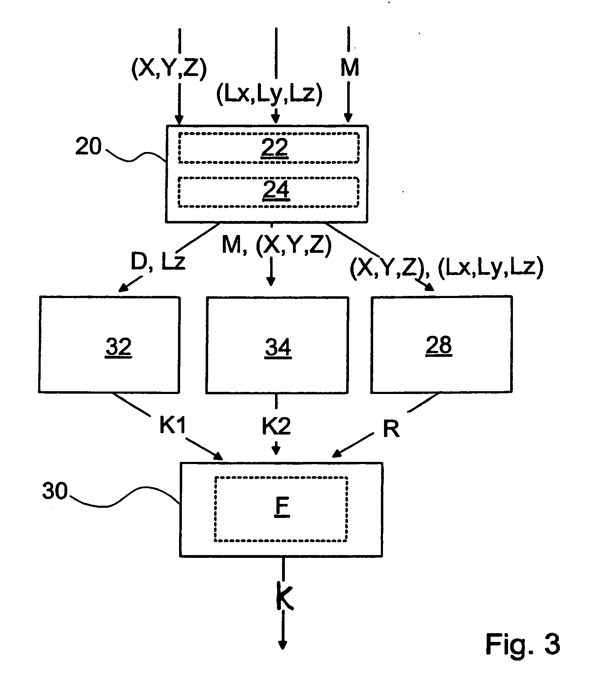

Dazu lässt die Steuereinheit 16 in einem ersten Schritt 20 (Figur 3) in die Bestimmung der Kenngröße K die Lage X, Y, Z der Stückguteinheiten 12 zueinander, die Größe Lx, Ly, Lz der Stückguteinheiten 12 und das Gewicht M der Stückguteinheiten 12 einfließen. Die Lage X, Y, Z der Stückguteinheiten 12 zueinander, die Größe Lx, Ly, Lz der Stückguteinheiten 12 und das Gewicht M bilden die Eingangsvariablen für den Schritt 20. Zur Bestimmung der Größe Lx, Ly, Lz können im Bereich der Fördereinheit 18 beispielsweise Kameras angeordnet sein, deren Bilddaten von der Steuereinheit 16 oder einem externen Rechner ausgewertet werden, um die Kantenlängen der Stückguteinheiten 12 zu bestimmen. Zur Bestimmung des Gewichts M kann in die Fördereinrichtung 18 eine Waage integriert sein oder das Robotersystem kann die Stückguteinheit 12 mittels der Greifereinheit 14 anheben, um das Gewicht M zu bestimmen.

Alternativ könnten die Stückguteinheiten 12 bei bekannter Größe Lx, Ly, Lz und/oder bekanntem Gewicht M einen maschinenlesbaren Code aufweisen, der von einer entsprechenden Leseinheit eingelesen werden kann.

Ausgehend von den derart ermittelten Kantenlängen bzw. Größen Lx, Ly, Lz berechnet die Steuereinheit 16 in einem Schwerpunktbestimmungsschritt 22 die Lage Xₛ, Yₛ, Zₛ eines Schwerpunkts der von der Fördereinheit angelieferten Stückguteinheit 12 als den Mittelpunkt der Quaderform der Stückguteinheit 12. In Fällen, in denen die Gewichtverteilung innerhalb der Stückguteinheiten 12 bekannt ist, kann der Schwerpunkt auch abweichend vom Mittelpunkt der Quaderform bestimmt werden.

In einem Abstandsbestimmungsschritt 24 bestimmt die Steuereinheit 16 einen Abstand des Schwerpunkts von den möglichen Kippkanten der Stückguteinheit 12. Dazu verwendet die Steuereinheit 16 die relative Lage X, Y, Z der Stückguteinheit 12 zu anderen Stückguteinheiten 12' derart, dass zunächst die konvexe Hülle der Aufstellfläche bestimmt wird, auf welcher die zusätzliche Stückguteinheit 12 aufgestellt werden soll. Anschließend wird die Schnittmenge der Grundfläche Stückguteinheit 12 mit der konvexen Hülle der Aufstellfläche bestimmt. Die Kanten der Schnittmenge bilden die Kippkanten. Wenn die Projektion des Schwerpunkts auf die Grundfläche außerhalb der Schnittmenge liegt, ist die entsprechende Konfiguration bereits physikalisch instabil. Als instabilste Kippkante wird diejenige Kippkante ausgewählt, deren senkrechter Abstand zu der Projektion des Schwerpunkts der Stückguteinheit 12 der geringste ist. Dieser Abstand D wird als Abstandskenngröße gespeichert.

Ferner bildet die Steuereinheit 16 in einem ersten Berechnungsschritt 32 ein Verhältnis des Abstands D des Schwerpunkts von der Kippkante der Stückguteinheit 12 bzw. der Abstandsenngröße zu einer Höhe Lz der der Stückguteinheit 12. Dieses verhältnis wird als erste Kippsicherheitskenngröße K1 gespeichert.

Zudem bildet die Steuereinheit 16 in einem zweiten Berechnungsschritt 34 eine zweite Kippsicherheitskenngröße K2 für eine Kippsicherheit einer Stückguteinheit 12, abhängig von einem Verhältnis des Kippmoments, das zum Kippen der Stückguteinheit 12 benötigt wird, zu der Auflagekraft der Stückguteinheit 12 oder der Gruppe von Stückguteinheiten 12. Diese zweite Kippsicherheitskenngröße K2 hängt von der ersten Kippsicherheitskenngröße K1 ab.

Bei der Bestimmung der Auflagekraft der Stückguteinheit 12 berücksichtigt die Steuereinheit 16 insbesondere in einem Betriebsmodus, in dem die Anordnung der Stückguteinheiten 12 nicht sequenziell sondern in Gruppen bestimmt wird, die Gewichtskraft der Stückguteinheit 12 sowie die von anderen Stückguteinheiten 12' auf die betrachtete Stückguteinheit 12 übertragenen vertikalen Kraftkomponenten.

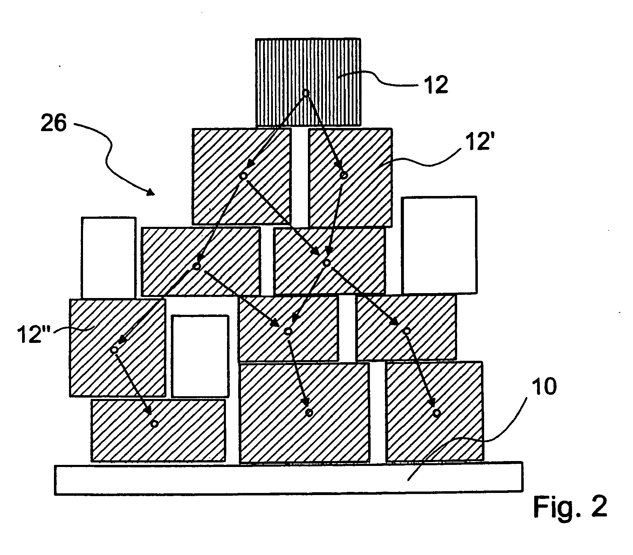

Schematisch ist die Logik der Stabilitätsbestimmung in Figur 2 dargestellt. In Figur 2 illustrieren Pfeile die Übertragung der Gewichtskraft einer hinzugefügten Stückguteinheit 12 auf die bereits im Paketstapel 26 aufgeschichteten Stückguteinheiten 12', wobei diejenigen Stückguteinheiten 12', deren Auflagekraft durch das Gewicht der hinzugefügten Stückguteinheit 12 beeinflusst werden, mit einer schrägen Schraffur hervorgehoben sind. Um den Rechenaufwand zu minimieren, propagiert die Steuereinheit 16 nur die Vertikalkomponenten der Kräfte durch den Paketstapel 26. Bei der Bewertung der Stabilität bzw. bei der Auswahl der optimalen Packposition kann die Steuereinheit 16 auf diese Weise den Einfluss der hinzugefügten Stückguteinheit 12 auf den gesamten Aufbau bewerten, da die durch die Gewichtskraft der Stückguteinheit 12 erhöhte Auflagekraft auch weiter unten liegende Gruppen von Stückguteinheiten 12' stabilisieren kann. Beispielsweise wird die Stückguteinheit 12" in Figur 2 durch die zusätzliche Gewichtskraft offensichtlich stabilisiert.

Ferner bestimmt die Steuereinheit 16 in einem Dichtebestimmungsschritt 28 wenigstens eine Kenngröße für eine Dichte R des Lademusters der Stückguteinheiten 12. Als Dichte R wird in diesem Zusammenhang der Grad der Raumfüllung in Prozent bezeichnet, nicht die Massendichte.

Die erste und die zweite Kippsicherheitskenngröße K1, K2 und die Dichte R sowie ggf. weitere Merkmale bilden eine vorgegebene Zahl von Merkmalen, die in einem Kenngrößenbestimmungsschritt 30 von der Steuereinheit 16 genutzt werden, um die Kenngröße K für die Stabilität des Lademusters aus einer approximativen Funktion F zu bestimmen. Die approximative Funktion F benötigt insbesondere die Merkmale (K1, K2, R) als Variablen.

In einem hier nicht dargestellten Trainingsverfahren bestimmt die Steuereinheit 16 die approximative Funktion F unter der Verwendung von Lademustern mit bekannter Stabilität. Dazu werden im Trainingsverfahren die Lademuster und bekannte Informationen über die Stabilität der zugehörigen Beladung eingegeben. Die Informationen können empirisch gewonnen werden, indem das Robotersystem die Lademuster aufbaut und Stabilitätstests durchgeführt werden.

Die derart gewonnene approximative Funktion F bildet die Werte der Merkmale bzw. das Merkmalstupel auf einen Wahrscheinlichkeitswert der zugehörigen Lademuster ab und ist ein quadratischer Bayesscher Klassifikator. Der Wahrscheinlichkeitswert bildet die Kenngröße K für die Stabilität des Lademusters.

Im eigentlichen Verfahren zum Steuern des Robotersystems zur Beladung von Lademitteln 10 mit Stückguteinheiten 12, bzw. zum Steuern der Bewegungen der Greifereinheit 14 zum Greifen der Stückguteinheiten 12 entscheidet die Steuereinheit 16 mittels des Bayesschen Klassifikators über die Stabilität eines vorgeschlagenen Lademusters. Nur wenn das vorgeschlagene Lademuster die geforderten Stabilitätskriterien wahrscheinlich erfüllt, wird die dem Lademuster entsprechende Beladung vorgenommen.

Es sind weitere Ausgestaltungen der Erfindung denkbar, in welchen auch im Normalbetrieb fehlerhafte Einschätzungen der Stabilität erkannt werden können und die entsprechende Information an die Steuereinheit 16 zurückgegeben werden kann, so dass ein kontinuierliches Lernen aus Fehlern ermöglicht wird.

### Bezugszeichenliste

- 10: Lademittel
- 12: Stückguteinheit
- 14: Greifereinheit
- 16: Steuereinheit
- 18: Fördereinheit
- 20: Schritt
- 22: Schwerpunktbestimmungsschritt
- 24: Abstandsbestimmungsschritt
- 26: Paketstapel
- 28: Dichtebestimmungsschritt
- 30: Kenngrößenbestimmungsschritt
- 32: Berechnungsschritt
- D: Abstand (Projektion des Schwerpunkts von Kippkante)
- F: Funktion
- K: Kenngröße
- K1: Kippsicherheitskenngröße
- K2: Kippsicherheitskenngröße
- Lx, Ly, Lz: Größe

- M: Gewicht
- R: Dichte
- X, Y, Z: (relative) Lage von Stückguteinheiten 12
- Xₛ, Yₛ, Zₛ: Schwerpunktlage

## Patentansprüche

1. Robotersystem zur Beladung von Lademitteln (10) mit Stückguteinheiten (12), mit einer Greifereinheit (14) zum Greifen der Stückguteinheiten (12) und einer Steuereinheit (16) zum Steuern der Bewegungen der Greifereinheit (14) und zum Bestimmen eines Lademusters der Stückguteinheiten (12), wobei die Steuereinheit (16) zur Bestimmung wenigstens einer die Stabilität des Lademusters charakterisierenden Kenngröße (K) ausgebildet ist, **dadurch gekennzeichnet, dass** die Steuereinrichtung (16) dazu ausgelegt ist, wenigstens eine Kippsicherheitskenngröße (K1) einer Stückguteinheit (12) oder einer Gruppe von Stückguteinheiten abhängig von einem Verhältnis des Kippmoments, das zum Kippen der Stückguteinheit (12) oder der Gruppe von Stückguteinheiten benötigt wird, zum Standmoment der Stückguteinheit (12) oder der Gruppe von Stückguteinheiten, zu bestimmen.

2. Robotersystem nach Anspruch 1, **dadurch gekennzeichnet, dass** die Steuereinheit (16) dazu ausgebildet ist, aus mehreren möglichen Lademustern ein Lademuster abhängig von der Kenngröße (K) für die Stabilität auszuwählen.

3. Robotersystem nach einem der vorhergehenden Ansprüche, **dadurch gekennzeichnet, dass** die Steuereinheit (16) dazu ausgelegt ist, dass in die Bestimmung der Kenngröße (K) die relative Lage (X, Y, Z) der Stückguteinheiten (12) zueinander und/oder die Größe (Lx, Ly, Lz) der Stückguteinheiten (12) und/oder das Gewicht (M) der Stückguteinheiten (12) eingeht.

4. Robotersystem nach einem der vorangehenden Ansprüche, **dadurch gekennzeichnet, dass** das Verhältnis von Standfläche zu Auflagefläche in die Bestimmung eingeht.

5. Robotersystem nach einem der vorhergehenden Ansprüche, **dadurch gekennzeichnet, dass** die Steuereinheit (16) dazu ausgelegt ist, die Lage eines Schwerpunkts wenigstens einer Stückguteinheit (12) oder einer Gruppe von Stückguteinheiten zu berechnen.

6. Robotersystem nach Anspruch 5, **dadurch gekennzeichnet, dass** die Steuereinheit (16) dazu ausgelegt ist, einen Abstand (D) des Schwerpunkts wenigstens der Stückguteinheit (12) oder der Gruppe von Stückguteinheiten von einer Kippkante der Stückguteinheit (12) oder der Gruppe von Stückguteinheiten zu berechnen.

7. Robotersystem nach Anspruch 6, **dadurch gekennzeichnet, dass** die Steuereinheit (16) dazu ausgelegt ist, ein Verhältnis des Abstands des Schwerpunkts von der Kippkante der Stückguteinheit (12) oder der Gruppe von Stückguteinheiten zu einer Höhe (Lz) der Stückguteinheit (12) oder der Gruppe von Stückguteinheiten zu bilden.

8. Robotersystem nach Anspruch 7, **dadurch gekennzeichnet, dass** die Steuereinheit (16) dazu ausgelegt ist, bei der Bestimmung der Auflagekraft der Stückguteinheit (12) oder der Gruppe von Stückguteinheiten die Gewichtskraft der Stückguteinheit (12) oder der Gruppe von Stückguteinheiten sowie die von anderen Stückguteinheiten (12) auf die betrachtete Stückguteinheit (12) übertragenen vertikalen Kraftkomponenten zu berücksichtigen.

9. Robotersystem nach einem der vorhergehenden Ansprüche, **dadurch gekennzeichnet, dass** die Steuereinheit (16) dazu ausgelegt ist, wenigstens eine Kenngröße für eine Dichte (R) des Lademusters der Stückguteinheiten (12) zu bestimmen.

10. Robotersystem nach einem der vorhergehenden Ansprüche, **dadurch gekennzeichnet, dass** die Steuereinheit (16) dazu ausgelegt ist, Kräfte durch einen Stapel von Stückguteinheiten (12) zu propagieren.

11. Robotersystem nach einem der vorhergehenden Ansprüche, **dadurch gekennzeichnet, dass** die Steuereinheit (16) dazu ausgelegt ist, die Kenngröße (K) für die Stabilität des Lademusters abhängig von einer vorgegebenen Zahl von Merkmalen aus einer approximativen Funktion (F) zu bestimmen, die insbesondere in einem Trainingsverfahren unter der Verwendung von Lademustern mit bekannter Stabilität zu bestimmt ist, und/oder Werte der Merkmale auf einen Wahrscheinlichkeitswert der zugehörigen Lademuster abbildet, wobei die approximative Funktion (F) insbesondere ein quadratischer Bayesscher Klassifikator ist.

12. Robotersystem nach einem der vorhergehenden Ansprüche, **dadurch gekennzeichnet, dass** die Steuereinheit (16) dazu ausgelegt ist, zur Bestimmung der Kenngröße (K) für die Stabilität des Lademusters nur vertikale Kraftkomponenten innerhalb des Lademusters zu berücksichtigen.

13. Verfahren zum Steuern eines Robotersystems zur Beladung von Lademitteln (10) mit Stückguteinheiten (12), das eine Greifereinheit (14) zum Greifen der Stückguteinheiten (12) aufweist, **dadurch gekennzeichnet, dass** wenigstens eine die Stabilität des Lademusters charakterisierende Kippsicherheitskenngröße (K1) bestimmt wird, entsprechend dem Kennzeichen des Anspruchs 1.

14. Verfahren nach Anspruch 13, **dadurch gekennzeichnet, dass** das Verhältnis von Standfläche zu Auflagefläche in die Bestimmung eingeht.

## Claims

1. Robot system for loading loading means (10) comprising parcel units (12), with a gripper unit (14) for gripping the parcel units (12) and a control unit (16) for controlling the movements of the gripper unit (14) and for determining a loading pattern of the parcel units (12), wherein the control unit (16) is designed for determining at least one parameter (K) characterising the stability of the loading pattern, **characterised in that** the control device (16) is set up to determine at least one tipping safety parameter (K1) of a parcel unit (12) or a group of parcel units depending on a ratio of the tipping moment, which is necessary for tipping the parcel unit (12) or the group of parcel units, to the stability moment of the parcel unit (12) or group of parcel units.

2. Robot system according to claim 1, **characterised in that** the control unit (16) is configured to select from several possible loading patterns a loading pattern which is dependent on the parameter (K) for stability.

3. Robot system according to any one of the preceding claims, **characterised in that** the control unit (16) is set up, so that the relative position (X, Y, Z) of the parcel units (12) to one another and/or the size (Lx, Ly, Lz) of the parcel units (12) and/or the weight (M) of the parcel units (12) influences the determination of the parameter (K).

4. Robot system according to any one of the preceding claims, **characterised in that** the ratio of the standing surface to the bearing surface influences the determination.

5. Robot system according to any one of the preceding claims, **characterised in that** the control unit (16) is set up to calculate the position of a centre of gravity of at least one parcel unit (12) or group of parcel units.

6. Robot system according to claim 5, **characterised in that** the control unit (16) is set up to calculate a distance (D) of the centre of gravity of at least the parcel unit (12) or group of parcel units from a tipping edge of the parcel unit (12) or group of parcel units.

7. Robot system according to claim 6, **characterised in that** the control unit (16) is set up to form a ratio of the distance of the centre of gravity from the tipping edge of the parcel unit (12) or group of parcel units to a height (Lz) of the parcel unit (12) or group of parcel units.

8. Robot system according to claim 7, **characterised in that** the control unit (16) is set up when determining the bearing force of the parcel unit (12) or group of parcel units to take into consideration the weight force of the parcel unit (12) or group of parcel units and the vertical force components transferred by other parcel units (12) onto the parcel unit (12) concerned.

9. Robot system according to any one of the preceding claims, **characterised in that** the control unit (16) is set up to determine at least one parameter for the density (R) of the loading pattern of the parcel units (12).

10. Robot system according to any one of the preceding claims, **characterised in that** the control unit (16) is set up to propagate forces through a stack of parcel units (12).

11. Robot system according to any one of the preceding claims, **characterised in that** the control unit (16) is set up to determine the parameter (K) for the stability of the loading pattern depending on a predefined number of features from an approximate function (F), which is determined in particular in a training process with the use of loading patterns with known stability, and/or adapts values of the features to a probability value of the associated loading pattern, wherein the approximate function (F) is in particular a quadratic Bayes classifier.

12. Robot system according to any one of the preceding claims, **characterised in that** the control unit (16) is set up only to take into consideration vertical force components within the loading pattern to determine the parameter (K) for the stability of the loading pattern.

13. Method for controlling a robot system for loading loading means (10) with parcel units (12), which comprises a gripper unit (14) for gripping the parcel units (12), **characterised in that** at least one tipping safety parameter (K1) characterising the stability of the loading pattern is determined, according to the characterising part of claim 1.

14. Method according to claim 13, **characterised in that** the ratio of the standing surface to the bearing surface influences the determination.

## Revendications

1. Système de robot pour le chargement de moyens de chargement (10) avec des unités de marchandises (12), comportant une unité de préhension (14) pour saisir les unités de marchandises (12) et une unité de commande (16) pour commander les mouvements de l'unité de préhension (14) et pour déterminer un modèle de chargement des unités de marchandises (12), l'unité de commande (16) étant réalisée pour déterminer au moins un paramètre (K) caractérisant la stabilité du modèle de chargement, **caractérisé en ce que** le dispositif de commande (16) est conçu pour déterminer au moins un paramètre de stabilité au basculement (KI) d'une unité de marchandises (12) ou d'un groupe d'unités de marchandises en fonction d'un rapport du couple de basculement qui est nécessaire pour faire basculer l'unité de marchandises (12) ou le groupe d'unités de marchandises (12), au moment de stabilité de l'unité de marchandises (12) ou du groupe d'unités de marchandises (12).

2. Système de robot selon la revendication 1, **caractérisé en ce que** l'unité de commande (16) est réalisée pour choisir parmi plusieurs modèles de chargement possibles un modèle de chargement en fonction du paramètre (K) pour la stabilité.

3. Système de robot selon l'une des revendications précédentes, **caractérisé en ce que** l'unité de commande (16) est conçue pour que la position relative (X, Y, Z) des unités de marchandises (12) les unes par rapport aux autres et/ou la taille (Lx, Ly, Lz) des unités de marchandises (12) et/ou le poids (M) des unités de marchandises (12) soit pris(e) en compte dans la détermination du paramètre (K).

4. Système de robot selon l'une des revendications précédentes, **caractérisé en ce que** le rapport entre la surface d'installation et la surface d'appui est pris en compte dans la détermination.

5. Système de robot selon l'une des revendications précédentes, **caractérisé en ce que** l'unité de commande (16) est conçue pour calculer la position d'un centre de gravité d'au moins une unité de marchandises (12) ou d'un groupe d'unités de marchandises (12).

6. Système de robot selon la revendication 5, **caractérisé en ce que** l'unité de commande (16) est conçue pour calculer une distance (D) du centre de gravité d'au moins l'unité de marchandises (12) ou le groupe d'unités de marchandises par rapport à une arête de basculement de l'unité de marchandises (12) ou du groupe d'unités de marchandises.

7. Système de robot selon la revendication 6, **caractérisé en ce que** l'unité de commande (16) est conçue pour former un rapport de la distance du centre de gravité depuis l'arête de basculement de l'unité de marchandises (12) ou du groupe d'unités de marchandises jusqu'à une hauteur (Lz) de l'unité de marchandises (12) ou du groupe d'unités de marchandises.

8. Système de robot selon la revendication 7, **caractérisé en ce que** l'unité de commande (16) est conçue pour tenir compte de la force de pesanteur de l'unité de marchandises (12) ou du groupe d'unités de marchandises ainsi que les composantes de forces verticales transmises sur l'unité de marchandises (12) considérée, lors de la détermination de la force d'appui de l'unité de marchandises (12).

9. Système de robot selon l'une des revendications précédentes, **caractérisé en ce que** l'unité de commande (16) est conçue pour déterminer au moins un paramètre pour une densité (R) du modèle de chargement des unités de marchandises (12).

10. Système de robot selon l'une des revendications précédentes, **caractérisé en ce que** l'unité de commande (16) est conçue pour propager des forces à travers une pile d'unités de marchandises (12).

11. Système de robot selon l'une des revendications précédentes, **caractérisé en ce que** l'unité de commande (16) est conçue pour déterminer le paramètre (K) pour la stabilité du modèle de chargement en fonction d'un nombre prédéterminé de caractéristiques parmi une fonction (F) approximative, qui doit être déterminée en particulier dans un procédé de training en utilisant des modèles de chargement avec stabilité connue et/ou qui reproduit des valeurs des caractéristiques qui concernent la valeur de probabilité des modèles de chargement associés, la fonction (F) approximative étant en particulier un classifieur bayesien carré.

12. Système de robot selon l'une des revendications précédentes, **caractérisé en ce que** l'unité de commande (16) est conçue pour déterminer le paramètre (K) pour la stabilité du modèle de chargement, en ne tenant compte que des composantes de force verticales à l'intérieur du modèle de chargement.

13. Procédé de commande d'un système de robot pour le chargement de moyens de chargement (10) avec des unités de marchandises (12), qui présente une unité de préhension (14) pour saisir les unités de marchandises (12), **caractérisé en ce qu'**on détermine au moins un paramètre de stabilité au basculement (K1) caractérisant la stabilité du modèle de chargement, selon la partie caractérisante de la revendication 1.

14. Procédé selon la revendication 13, **caractérisé en ce que** le rapport entre la surface d'installation et la surface d'appui est pris en compte dans la détermination.
